# EUROPEAN PATENT APPLICATION

(11) **EP 3 290 342 A1**
(43) Date of publication of application: **07.03.2018**
(21) Application number: 17189440.5
(22) Date of filing: 05.09.2017
(51) Int. Cl.: B64D 45/00, F02C 7/00, G05B 23/02, G01N 15/00

(54) **METHODS OF MODIFYING TURBINE ENGINE OPERATING LIMITS**

(30) Priority: 06.09.2016 US 201662383654 P
(71) Applicant: Rolls-Royce North American Technologies, Inc., Indianapolis, IN 46241 (US)
(72) Inventor: Hodge, C. Edward, Plainfield, IN Indiana 46168 (US)
(74) Representative: Roberts, Peter David

(57) **Abstract**

The present disclosure is directed to systems and methods of modifying turbine engine operating limits due to the intake of particulate matter. More specifically, the present disclosure is directed to the use of a sensor at the inlet of a turbine engine to measure the characteristics of particulate flow into the turbine engine such as the volume, density, flow rate, size, shape, and surface type of particulate matter. Based on these measurements, the operating limits of the turbine engine are adjusted due to known degrading effects of particulate matter intake. The adjusted operating limits may include real-time operating limits such as maximum temperature and pressure, or long-range operating limits such as engine lifespan and maintenance cycles.

## Description

### CROSS REFERENCE TO RELATED APPLICATION

The present application claims priority to U.S. Provisional Patent Application No. 62/383,654, filed September 6, 2016, the entirety of which is hereby incorporated by reference.

### FIELD OF THE DISCLOSURE

The present disclosure relates generally to measuring particulate matter in fluid flow, and more specifically to modifying the operating limits of a turbine engine based on measured particulate matter at the turbine inlet.

### BACKGROUND

Turbine engines are generally operated based on a set of operating limits which can be both real-time (maximum temperature, pressure ranges, etc.) and long-term (maximum operating hours in engine lifespan). Operating limits can be adjusted based on turbine engine performance to ensure safe engine operation.

Turbine engines are vulnerable to degraded performance, damage, and even destruction due to intake of atmospheric air with particulate matter such as sand, dirt, ash, debris, and the like. The use of particulate-laden atmospheric air as the working fluid of the turbine engine causes component erosion which can lead to significant reduction in the operating lifespan of the turbine engine or even engine failure.

Engine operation in high particulate environments is preferably avoided altogether. For example, the 2010 eruption of the Eyjafjallajökull volcano in Iceland resulted in the cancellation of thousands of commercial flights and the closure of large portions of European airspace. However, such operational avoidance is not always possible, and turbine engines are frequently operated in more moderate particulate environments such as in dry and dusty conditions in the American West or Middle East. When it is necessary to operate a turbine engine in such an environment, there is a need in the art to quantify and qualify the particulate matter ingested into the turbine engine and to adjust operating limits accordingly.

### SUMMARY

According to an aspect of the invention there is provided a method for modifying a life cycle schedule in a turbine engine, wherein the life cycle schedule is determined based on a predetermined operational profile of the turbine engine and empirical data, the method comprising detecting in real time the presence of particulate matter in fluid flow entering an inlet of the turbine engine and modifying the life cycle schedule based upon the presence of particulate matter.

The method may further comprise the step of quantifying characteristics of the particulate matter.

The characteristics of the particulate matter may be selected from a group consisting of volume, amount, density, flow rate, particle size, particle shape, and particle surface.

The life cycle schedule may comprise a maintenance schedule.

The maintenance schedule may include events selected from a group consisting of routine maintenance, inspection, cleaning, part replacement, overhaul, and retire.

The step of detecting in real time the presence of particulate matter may further comprise logging the characteristics of the particulate matter and duration of the particulate matter presence to create logged data.

The method may further comprise comparing the logged data to a second set of empirical data, the second set of empirical data associated with the characteristics of the particulate matter and the duration.

The method may further comprise positioning a sensor assembly at the inlet of the turbine engine to detect the presence of particulate matter.

The sensor assembly may comprise a laser emitter and a plurality of receivers configured to receive a reflection of a laser beam off of the particle surface.

The sensor assembly may comprise a laser emitter and a plurality of receivers configured to measure the degree to which the laser beam was not absorbed by the particle.

According to a second aspect of the invention there is provided, in a mission profile which requires operation of a turbine engine in high-particulate environments, a method of providing real time deleterious impact upon the turbine engine comprising the steps of:
positioning a sensor suite in the inlet of the turbine engine;
determining a first set of characteristics of the foreign particles ingested into the turbine engine from a first output of the sensor suite;
comparing the first set of characteristics of the foreign particles to empirical data, wherein the empirical data is associated with wear on turbine engine components as a result of ingestion of foreign particles with similar characteristics to the first set of characteristics; and
determining a degradation of the turbine engine based on the comparison and providing determination to an operator of the gas turbine.

The determination may comprise time to failure.

The determination may comprise reduction of performance.

The determination may comprise likelihood of mission completion.

The method may further comprise determining a second set of characteristics of the foreign particles ingested into the turbine engine; wherein the second set is determined from output of the sensor suite subsequent to the first output; and comparing the second set of characteristics of the foreign particles to empirical data, wherein the empirical data is associated with wear on turbine engine components as a result of ingestion of foreign particles with similar characteristics to the second set of characteristics;
determining additional degradation of the turbine engine based on the comparison of the second set of characteristics and the previously determined degradation; and
providing the additional determination to the operator of the turbine engine.

The sensor suite may comprise a plurality of receivers and an emitter.

The emitter may be a laser and the plurality of receivers may be configured to receive a reflection of a laser beam off the particle surface or measure the degree to which the laser beam was not absorbed by the particle.

According to a third aspect of the invention there is provided a method for real time mapping of atmospheric particle distributions comprising:
equipping a plurality of aircraft with a turbine inlet particulate sensor;
powering the plurality of aircraft through a geographic area via the turbine engine;
for each of the plurality of aircraft:
   detecting the presence of particulate matter in fluid flow entering the turbine inlet; and,
   associating the detection of particulate matter with the location of the aircraft in the geographic area;
   transmitting the associated data to a central station; and
   mapping the distribution of particles in the atmosphere based on the associated data received from the plurality of aircraft.

The step of detecting may further comprise quantifying the characteristics of the particulate matter based on the output of the turbine inlet particulate sensor, wherein the characteristics of the particulate matter are selected from the group consisting of volume, amount, density, flow rate, particle size, particle shape, and particle surface.

The method may further comprise altering the flight plans of one or more turbine powered aircraft in the geographic area based upon the mapping.

The present application discloses one or more of the features recited in the appended claims and/or the following features which, alone or in any combination, may comprise patentable subject matter.

### BRIEF DESCRIPTION OF THE DRAWINGS

The following will be apparent from elements of the figures, which are provided for illustrative purposes and are not necessarily to scale.
Fig. 1 is a flow diagram of a method of modifying engine operational limits in accordance with some embodiments of the present disclosure.
Fig. 2 is a schematic diagram of a turboshaft type turbine engine assembly in accordance with some embodiments of the present disclosure.
Fig. 3 is a schematic diagram of a turbofan type turbine engine assembly and inlet ducting in accordance with some embodiments of the present disclosure.
Fig. 4 is a schematic diagram of a sensor for monitoring fluid flow through a control volume in accordance with some embodiments of the present disclosure.
Fig. 5 is a flow diagram of a method of modifying engine operational limits in accordance with some embodiments of the present disclosure.
Fig. 6 is a flow diagram of a method of modifying engine operational limits in accordance with some embodiments of the present disclosure.

While the present disclosure is susceptible to various modifications and alternative forms, specific embodiments have been shown by way of example in the drawings and will be described in detail herein. It should be understood, however, that the present disclosure is not intended to be limited to the particular forms disclosed. Rather, the present disclosure is to cover all modifications, equivalents, and alternatives falling within the spirit and scope of the disclosure as defined by the appended claims.

### DETAILED DESCRIPTION

For the purposes of promoting an understanding of the principles of the disclosure, reference will now be made to a number of illustrative embodiments illustrated in the drawings and specific language will be used to describe the same.

The present disclosure is directed to systems and methods of modifying turbine engine operating limits due to the intake of particulate matter. More specifically, the present disclosure is directed to the use of a sensor at the inlet of a turbine engine to measure the characteristics of particulate flow into the turbine engine such as the volume, density, flow rate, size, shape, and surface type of particulate matter. Based on these measurements, the operating limits of the turbine engine are adjusted due to known degrading effects of particulate matter intake. The adjusted operating limits may include real-time operating limits such as maximum temperature and pressure, or long-range operating limits such as engine lifespan and maintenance cycles.

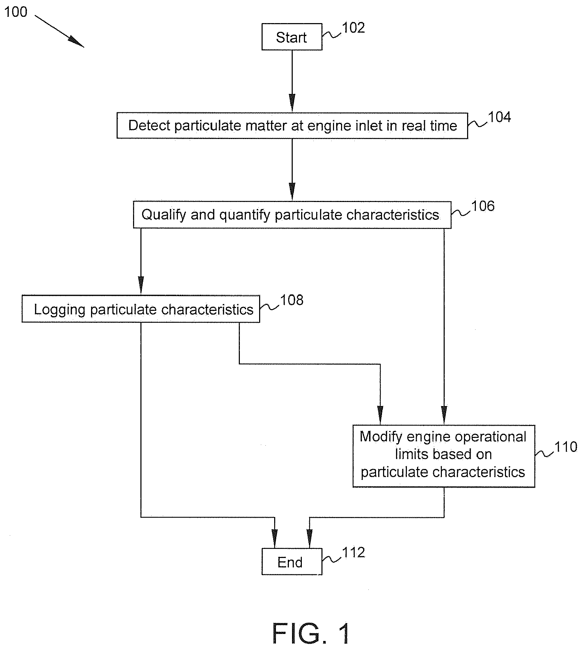

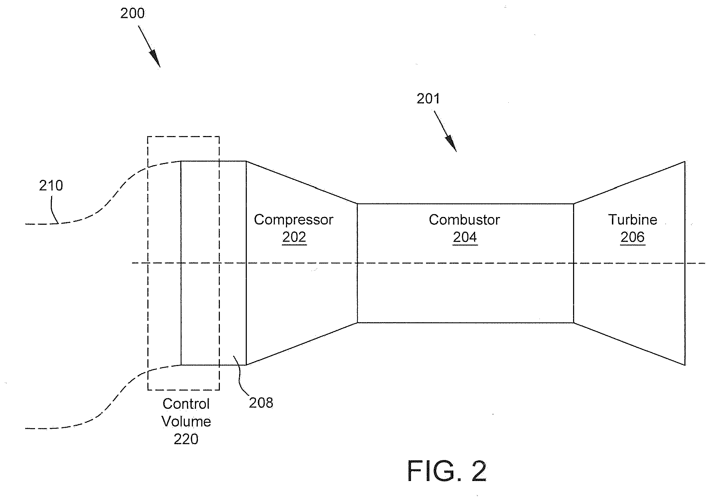

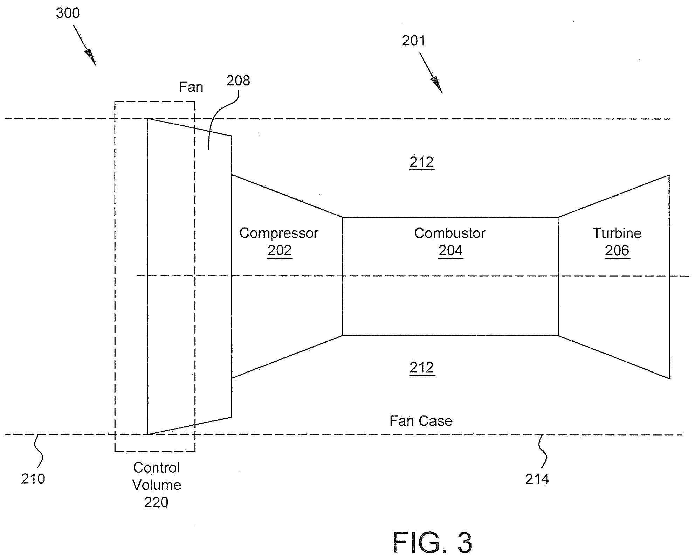

A method 100 is presented in Figure 1 for modifying turbine engine operational limits. The method starts at block 102. At block 104 a sensor or instrument is used to detect particulate matter in real time at the engine inlet. A sensor or instrument may detect the presence of particulate matter entering the engine inlet. In real time indicates that the data from the sensor is collected and transmitted to a processor immediately rather than stored for later evaluation. The engine inlet is defined by a control volume which is further illustrated in Figures 2 and 3.

Figure 2 presents a schematic diagram of a turboshaft type turbine engine assembly 200. Figure 3 presents a schematic diagram of a turbofan type turbine engine assembly 300. In each of assembly 200 and assembly 300, the turbine engine 201 comprises a compressor 202, combustor 204, and turbine 206. An inlet region 208 is disposed axially forward of the compressor, and in some embodiments the inlet region 208 includes an inlet fan 218. Forward from the inlet region 208 is an inlet duct 210 configured to direct fluid flow to the inlet region 208.

In the turboshaft type turbine engine assembly 200 illustrated in Figure 2, all fluid flow through the inlet region 208 enters the compressor 202. In the turbofan type turbine engine assembly 300, a portion of the fluid flow through the inlet region 208 enters the compressor 202, while a portion of the fluid flow through the inlet region 208 enters a bypass region 212 which is defined between the fan casing 214 and the compressor 202, combustor 204, and turbine 206.

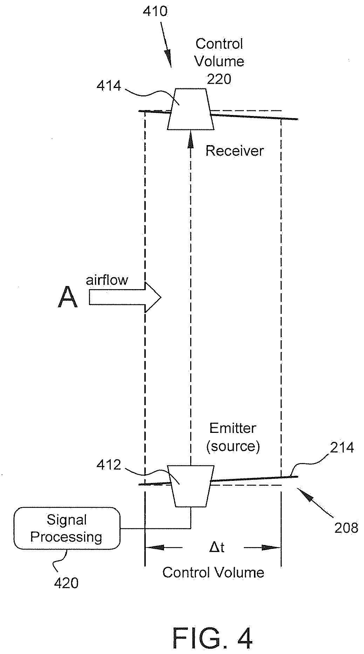

A control volume 220 is defined at the inlet region 208. Control volume 220 is monitored by one or more particulate sensors as shown in Figure 4, which is a schematic diagram of a sensor assembly 410 for monitoring fluid flow through a control volume 220. Sensor assembly 410 may be positioned at or proximate the control volume 220, or at or proximate inlet region 208. Sensor assembly 410 comprises an emitter 412 or source, and a receiver 414. The emitter 412 and receiver 414 are disposed across the control volume 220 from each other, such that signals emitted from the emitter 412 are received at the receiver 414. The emitter 412 and receiver 414 are also disposed generally perpendicular to the direction of mass airflow indicated by arrow A. The emitter 412 and receiver 414 may be mounted to a portion of the engine casing 214 at the inlet region 208. One or both of emitter 412 and receiver 414 may be coupled to a signal processor 420 either via fiber connection or wirelessly.

In operation, the emitter 412 emits a signal which is subsequently received at the receiver 414.

In some embodiments, sensor assembly 410 comprises a plurality of emitters 412, a plurality of receivers 414, or a plurality of emitters 412 and receivers 414. Based on distortions of the signal received at the receiver 414, the quality of the mass airflow A and characteristics of particulate matter therein may be determined. In some embodiments the emitter 412 is a laser emitter and the receivers are configured to receive a reflection of a laser beam emitted by the emitter 412 as it reflects off the particulate matter.

In some embodiments, the plurality of receivers 414 are configured to measure the degree to which an emitted laser beam was or was not absorbed by a particle of the particulate matter.

The disclosed sensors or sensor arrays may be compatible to operate under harsh conditions such as in sea or salt water spray, wide temperature fluctuations, extreme hot or cold temperatures, and rain or ice precipitation. The disclosed sensor or sensors must be sized to fit into the inlet ducting, engine housing, or engine casing within an acceptable space claim.

Data collected from the disclosed sensors may be sent to a processor for use in an Engine Health Monitoring System or a Prognostic Health Monitoring System which collect various engine operating parameters and continuously monitor the health and performance of the engine.

Returning now to the method 100 of Figure 1, once the sensor detects particulate matter at the engine inlet the method 100 moves to block 106. The sensor, generally in combination with a processor, evaluates selected characteristics of the particulate matter passing through the control volume in order to quantify and qualify the particulate matter. Particulate matter may be evaluated for characteristics such as, but not limited to, volume, amount, density, flow rate, particle size, particle shape, and particle surface.

At block 108, the particulate characteristics may be logged to create logged data which may be later compared to empirical data regarding the effects of particulate matter intake on turbine engine performance in order to adjust operating limits of the turbine engine. Logged data may include data collected from the sensor regarding, for example, volume, density, flow rate, size, shape, and surface type of particulate matter passing through the control volume and thus entering the turbine engine. Logged data may further include the duration of the particulate matter intake. Empirical data may include data regarding necessary changes to a turbine engine's operating limits, maintenance schedule, and life cycle based on the characteristics of particulate matter passing through the turbine engine. Empirical data may be associated with the characteristics of the particulate matter and/or the duration of intake. After creating logged data at block 108, the method 100 may proceed to block 110 or may end at block 112.

At block 110, turbine engine operational limits are modified based on particulate characteristics. As indicated in Figure 1, the step of modifying engine operational limits at block 110 may occur with or without the creation of logged data at block 108. The characteristics of particulate matter such as volume, density, flow rate, size, shape, and surface type of particulate matter passing through the control volume may be compared to empirical data regarding the effects of particulate matter intake on turbine engine performance in order to adjust operating limits of the turbine engine. Empirical data may include data regarding necessary changes to a turbine engine's operating limits, maintenance schedule, and life cycle based on the characteristics of particulate matter passing through the turbine engine. Based on this comparison, and thus based on the measured characteristics of particulate matter, the operating limits of the turbine engine are adjusted.

Several examples of the modification of turbine engine operating limits are provided. First, when operating in high-particulate environments it may be desirable to immediately alter one or more operating parameters of the turbine engine. For example, certain particulates such as volcanic ash may melt and bond to turbine components at sustained high temperatures. It may therefore be desirable to lower the engine's operating temperature when able if passing through an area of high volcanic ash concentration. Thus, by measuring the characteristics of the particulate matter passing through the control volume, the type of particulate may be determined and a signal may be sent to the engine operator indicating a desire to lower the maximum operating temperature of the turbine engine in order to prevent damage to engine components.

Second, particulate matter is known to have deleterious effects on certain engine components, such that operation in high-particulate environments makes it advisable to conduct early maintenance and/or replacement of the engine components than would otherwise be desirable. Periodic engine maintenance may include inspection, cleaning, and/or replacement of these components. During typical (i.e. non-high-particulate) operation of a turbine engine, maintenance of each of these components may occur on a periodic basis such as once every 1,000 hours of operation. However, when operating in high-particulate environments it may be desirable to increase the frequency of component inspection, cleaning, and/or replacement. By measuring characteristics of the particulate matter passing through the control volume and comparing those characteristics to empirical data, the operating limit of the engine maintenance cycle may be modified accordingly to ensure continued safe operation of the engine. Maintenance schedules may be modified to include maintenance life cycle events such as routine maintenance, periodic maintenance, inspection, cleaning, part replacement, overhaul, and retirement.

Third, the lifespan of the engine itself may be modified based on measured particulate intake. Turbine engines which routinely operate in high-particulate environments such as military aircraft operating in desert regions may need to be retired hundreds or even thousands of hours early due to the degradation and damage caused by particulate matter. By measuring characteristics of the particulate matter passing through the control volume and comparing those characteristics to empirical data, the operating limit of the engine lifespan may be modified accordingly to ensure continued safe operation of the engine.

Method 100 ends at block 112.

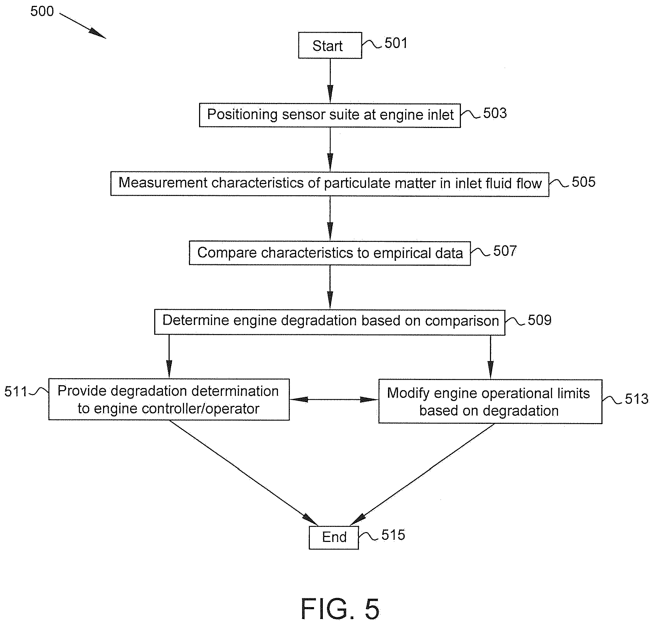

A method 500 of providing real time deleterious impact on a turbine engine is presented in the flow diagram of Figure 5. Method 500 starts at block 501 and proceeds to block 503, where a sensor suite is positioned at the inlet of a turbine engine. The sensor suite may comprise the sensor arrangements described above with reference to Figures 2-4.

With the sensor suite positioned at the engine inlet, fluid flow is induced through the inlet of the turbine engine, for example by moving the turbine engine through the atmosphere. At block 505, the characteristics of particulate matter passing through the engine inlet are measured by the sensor suite. Such characteristics may include the volume, density, flow rate, size, shape, and surface type of particulate matter.

At block 507, the measured characteristics from block 505 are compared against empirical data which may include data regarding necessary changes to a turbine engine's operating limits, maintenance schedule, and life cycle based on the characteristics of particulate matter passing through the turbine engine. Based on this comparison, at block 509 the likely engine degradation is determined.

From block 509, method 500 may proceed to block 511, block 513, or both. The steps defined in block 511 and block 513 may be performed sequentially in any order or simultaneously, or only one of block 511 and block 513 may be performed. At block 511, a controller or operator of the engine is provided with information regarding the likely degradation of the engine due to intake of particulate matter. Degradation information may describe deleterious impacts such as reduced engine performance (e.g. reduced maximum power of the engine), modified real-time operating limits of the engine, time to engine failure, likelihood of mission completion, increased frequency or modification of maintenance cycles, or reduced engine lifespan as discussed above.

For example with respect to a military aircraft, a mission profile including ingress, egress, loiter, payload drop etc. may be determined. Upon dectection of ingestion of particulate matter and determination of any deletarious effects, any remaining portion of the mission profile may be similated with encompasing the determined effects and the likely accumulated effects to determine if the mission profile can be performed, or should be aborted. Alternatively, a probablity of completing the mission profile may be provided to the operator, or portions of the mission profile that are no longer possible may be presented to the operator.

Similarly with respect to civilian aircraft passing though an area of high particulate matter, the operators may be informed whether to continue though to the destination upon a determination that the deleterious affect is minimal or take other actions. This real time information allows the operators to aviod additional damage to aircraft, avoid unnecessary rerouting or mission abort, while providing actionable information upon which life and death decisions may be aid.

At block 513 engine operating limits are modified based on the likely degradation determined at block 509. Non-limiting examples of operational limits which may be modified are provided above with reference to block 110 of Figure 1.

Method 500 ends at block 515.

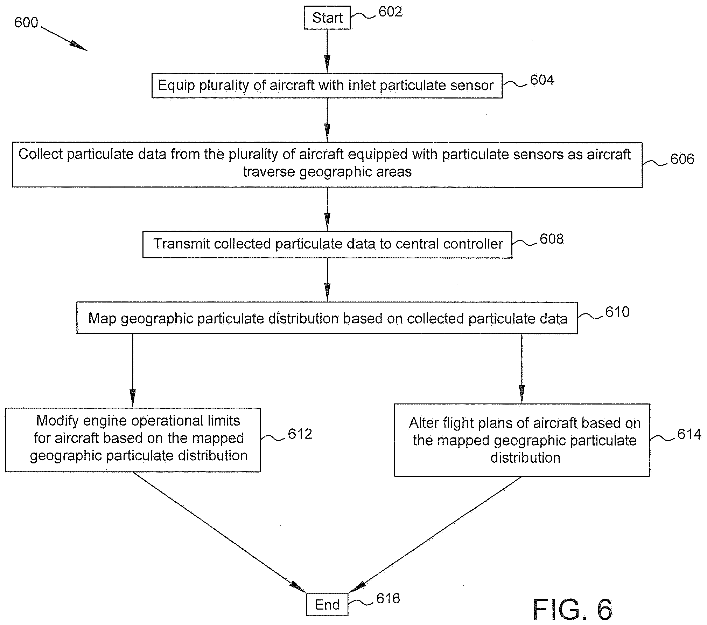

In a further aspect of the present disclosure, a method 600 is provided in the flow diagram of Figure 6 for mapping of particulate matter in the atmosphere. Method 600 starts at block 602 and proceeds to block 604, where a plurality of aircraft are equipped with particulate sensors at the inlet of one or more turbine engines. The particulate sensors may comprise the sensor arrangements described above with reference to Figures 2-4.

As the plurality of aircraft equipped with particulate sensors traverse various geographic areas, particulate matter data is collected via the particulate sensors at block 606 and transmitted to a central controller at block 608. Particulate matter data may include measurements of the volume, density, flow rate, size, shape, and surface type of particulate matter.

At block 610, particulate distributions are derived from the collected particulate matter data, and the particulate distributions are then mapped to show geographic distribution of particulate matter. For example, a map may be provided which shows density of particulate matter by discrete areas or regions, and such a map may be used to plan aircraft routes to avoid regions of highest density of particulate matter. Chronological iterations of this map can be used to track the movement of high-density particulate regions. As another example, a map may be generated which shows the distribution of various types or sizes of particulate matter by discrete areas or regions.

At block 612, turbine engine operating limits may be adjusted based on the mapped particulate matter distribution. For example, an aircraft known to have passed through a region of relatively higher density of particulate matter which is not equipped with particulate matter sensors may nonetheless have the aircraft engine maintenance schedule and/or lifespan modified based on an estimated intake of particulate matter.

At block 614, as suggested above the flight plans of one or more aircraft may be altered based on the map showing particulate matter densities. In general, it is highly desirable to avoid flight through areas of high density particulate matter due to the degrading effects of particulate matter on a turbine engine as described above. Thus, a map showing areas of relative danger to turbine engines based on collected data from a plurality of aircraft equipped with engine inlet particulate sensors would be highly valuable to aid other aircraft in avoiding flight through such areas. Method 600 ends at block 616.

The present disclosure advantageously modifies turbine engine operating limits according to characteristics of particulate matter intake such as volume, density, flow rate, size, shape, and surface type. Particulate sensors may transmit collected data to an engine controller or operator, which are able to beneficially alter the operating limit of the turbine engine in an effort to ensure continued safe operation. Particulate characteristic data may be advantageously used to control inlet air particle separation devices which assist in filtering particulate matter from engine intake. The collected particulate data may be used in real-time assessment of engine health and performance, or in long-term engine maintenance and lifespan planning.

According to an aspect of the present disclosure, a method for modifying a life cycle schedule in a turbine engine is disclosed. The life cycle schedule is determined based on a predetermined operational profile of the turbine engine and empirical data. The method comprises detecting in real time the presence of particulate matter in the fluid flow entering an inlet of the turbine engine and modifying the life cycle schedule based upon the presence of particulate matter.

In some embodiments the method further comprises quantifying the characteristics of the particulate matter. In some embodiments the characteristics of the particulate matter are selected from the group consisting of volume, amount, density, flow rate, particle size, particle shape, and particle surface. In some embodiments the life cycle schedule comprises a maintenance schedule. In some embodiments the maintenance schedule includes events selected from the group of routine maintenance, inspection, cleaning, part replacement, overhaul, and retire.

In some embodiments the step of detecting in real time the presence of particulate matter further comprises logging the characteristics of the particulate matter and duration of the particulate matter presence to create logged data. In some embodiments the method further comprises comparing the logged data to a second set of empirical data, the second set of empirical data associated with the characteristics of the particulate matter and the duration.

In some embodiments the method further comprises positioning a sensor assembly at the inlet of the turbine engine to detect the presence of particulate matter. In some embodiments the sensor assembly comprises a laser emitter and a plurality of receivers configured to receive a reflection of the laser beam off of the particle surface. In some embodiments the sensor assembly comprises a laser emitter and a plurality of receivers configured to measure the degree to which the laser beam was not absorbed by the particle.

According to another aspect of the present disclosure, in a mission profile which requires operation of a turbine engine in high-particulate environments, a method of providing real time deleterious impact upon the turbine engine comprises the steps of: positioning a sensor suite in the inlet of the gas turbine; determining a first set of characteristics of the foreign particles ingested into the turbine engine from a first output of the sensor suite; comparing the first set of characteristics of the foreign particles to empirical data, wherein the empirical data is associated with wear on turbine engine components as a result of ingestion of foreign particles with similar characteristics to the first set of characteristics; and determining a degradation of the turbine engine based on the comparison and providing determination to an operator of the gas turbine.

In some embodiments the determination comprises time to failure. In some embodiments the determination comprises reduction of performance. In some embodiments the determination comprises likelihood of mission completion.

In some embodiments the method further comprises determining a second set of characteristics of the foreign particles ingested into the turbine engine; wherein the second set is determined from output of the sensor suite subsequent to the first output; and comparing the second set of characteristics of the foreign particles to empirical data, wherein the empirical data is associated with wear on turbine engine components as a result of ingestion of foreign particles with similar characteristics to the second set of characteristics; determining additional degradation of the gas turbine based on the comparison of the second set of characteristics and the previously determined degradation; and providing the additional determination to the operator of the gas turbine.

In some embodiments the sensor suite comprises a plurality of receivers and an emitter. In some embodiments the emitter is a laser and the plurality of receivers are configured to receive a reflection of the laser beam off of the particle surface or measure the degree to which the laser beam was not absorbed by the particle.

According to yet another aspect of the present disclosure, a method is disclosed for real time mapping of atmospheric particle distributions. The method comprises equipping a plurality of aircraft with a turbine inlet particulate sensor; powering the plurality of aircraft through a geographic area via the turbine engine; detecting the presence of particulate matter in fluid flow entering the turbine inlet for each of the plurality of aircraft; associating the detection of particulate matter for each of the plurality of aircraft with the location of the aircraft in the geographic area; transmitting the associated data to a central station; and mapping the distribution of particles in the atmosphere based on the associated data received from the plurality of aircraft.

In some embodiments the step of detecting further comprises quantifying the characteristics of the particulate matter based on the output of the turbine inlet particulate sensor, wherein the characteristics of the particulate matter are selected from the group consisting of volume, amount, density, flow rate, particle size, particle shape, and particle surface. In some embodiments the method further comprises altering the flight plans of one or more turbine powered aircraft in the geographic area based upon the mapping.

Although examples are illustrated and described herein, embodiments are nevertheless not limited to the details shown, since various modifications and structural changes may be made therein by those of ordinary skill within the scope and range of equivalents of the claims.

## Claims

1. A method for modifying a life cycle schedule in a turbine engine, wherein the life cycle schedule is determined based on a predetermined operational profile of the turbine engine and empirical data, the method comprising detecting in real time the presence of particulate matter in fluid flow entering an inlet of the turbine engine and modifying the life cycle schedule based upon the presence of particulate matter.

2. The method of Claim 1, further comprising the step of quantifying characteristics of the particulate matter.

3. The method of Claim 2, wherein the characteristics of the particulate matter are selected from a group consisting of volume, amount, density, flow rate, particle size, particle shape, and particle surface.

4. The method of any of Claims 1 to 3, wherein the life cycle schedule comprises a maintenance schedule.

5. The method of Claim 4, wherein the maintenance schedule includes events selected from a group consisting of routine maintenance, inspection, cleaning, part replacement, overhaul, and retire.

6. The method of Claim 2, wherein the step of detecting in real time the presence of particulate matter further comprises logging the characteristics of the particulate matter and duration of the particulate matter presence to create logged data.

7. The method of Claim 6, further comprising comparing the logged data to a second set of empirical data, the second set of empirical data associated with the characteristics of the particulate matter and the duration.

8. The method of Claim 3, further comprising positioning a sensor assembly at the inlet of the turbine engine to detect the presence of particulate matter.

9. The method of Claim 8, wherein the sensor assembly comprises a laser emitter and a plurality of receivers configured to receive a reflection of a laser beam off of the particle surface; or
wherein the sensor assembly comprises a laser emitter and a plurality of receivers configured to measure the degree to which the laser beam was not absorbed by the particle.

10. In a mission profile which requires operation of a turbine engine in high-particulate environments, a method of providing real time deleterious impact upon the turbine engine comprising the steps of:
positioning a sensor suite in the inlet of the turbine engine;
determining a first set of characteristics of the foreign particles ingested into the turbine engine from a first output of the sensor suite;
comparing the first set of characteristics of the foreign particles to empirical data, wherein the empirical data is associated with wear on turbine engine components as a result of ingestion of foreign particles with similar characteristics to the first set of characteristics; and
determining a degradation of the turbine engine based on the comparison and providing determination to an operator of the gas turbine.

11. The method of Claim 10, wherein the determination comprises time to failure; or
wherein the determination comprises reduction of performance; or
wherein the determination comprises likelihood of mission completion.

12. The method of Claim 10, further comprising determining a second set of characteristics of the foreign particles ingested into the turbine engine; wherein the second set is determined from output of the sensor suite subsequent to the first output; and comparing the second set of characteristics of the foreign particles to empirical data, wherein the empirical data is associated with wear on turbine engine components as a result of ingestion of foreign particles with similar characteristics to the second set of characteristics;
determining additional degradation of the turbine engine based on the comparison of the second set of characteristics and the previously determined degradation; and
providing the additional determination to the operator of the turbine engine.

13. The method of Claim 10, wherein the sensor suite comprises a plurality of receivers and an emitter; wherein optionally
the emitter is a laser and the plurality of receivers are configured to receive a reflection of a laser beam off the particle surface or measure the degree to which the laser beam was not absorbed by the particle.

14. A method for real time mapping of atmospheric particle distributions comprising:
equipping a plurality of aircraft with a turbine inlet particulate sensor;
powering the plurality of aircraft through a geographic area via the turbine engine;
for each of the plurality of aircraft:
detecting the presence of particulate matter in fluid flow entering the turbine inlet; and,
associating the detection of particulate matter with the location of the aircraft in the geographic area;
transmitting the associated data to a central station; and
mapping the distribution of particles in the atmosphere based on the associated data received from the plurality of aircraft.

15. The method of Claim 14, wherein the step of detecting further comprises quantifying the characteristics of the particulate matter based on the output of the turbine inlet particulate sensor, wherein the characteristics of the particulate matter are selected from the group consisting of volume, amount, density, flow rate, particle size, particle shape, and particle surface; wherein optionally
the method further comprises altering the flight plans of one or more turbine powered aircraft in the geographic area based upon the mapping.
